# EUROPÄISCHE PATENTSCHRIFT

(11) **EP 1 132 002 B1**
(45) Veröffentlichungstag und Bekanntmachung des Hinweises auf die Patenterteilung: **10.11.2004**
(21) Anmeldenummer: 01104226.4
(22) Anmeldetag: 22.02.2001
(51) Int. Cl.: A21C 7/00

(54) **Verfahren und Einrichtung zum Herstellen von gleich grossen runden Teigstücken**
Process and apparatus for making equally sized round dough pieces
Procédé et dispositif de fabrication de morceaux de pâte arrondis de même dimensions

(30) Priorität: 29.02.2000 DE 10009300
(43) Veröffentlichungstag der Anmeldung: 12.09.2001
(73) Patentinhaber: Eberhardt Bäckereitechnik GmbH, 82166 Gräfelfing (DE)
(72) Erfinder: Schiessl, Max, 82166 Gräfelfing (DE)
(74) Vertreter: von Kirschbaum, Albrecht, Dipl.-Ing.

(56) Entgegenhaltungen:
- WO-A-90/06683
- DE-A- 2 943 088
- DE-C- 444 858
- US-A- 3 272 153

## Beschreibung

Die Erfindung betrifft ein Verfahren zum Herstellen von gleich großen runden Teigstücken nach dem Oberbegriff des Anspruchs 1 sowie eine Einrichtung nach dem Oberbegriff des Anspruchs 3 zum Durchführen des Verfahrens. Ein Solches Verfahren und eine solche Einrichtung ist z.B. aus der DE 444 858 bekannt.

In DE 444 858 C ist eine Vorrichtung beschrieben, bei welcher das Rundwirken mit einer kreisenden Wirkplatte im unteren Scheitelpunkt einer Trommel erfolgt, in deren Mantel in gleichen Abständen Näpfe vorhanden sind, die eine gewisse Menge Teig aufnehmen. Vor und nach dem Wirken soll ein Band, welches die Trommel und die Wirkplatte im unteren Bereich umschlingt, verhindern, dass die Teigstücke aus den Näpfen herausfallen. Die Trommel transportiert somit im Zusammenwirken mit dem Band die Teigstücke auf die Wirkplatte und von dort wieder auf das Band.

Nachdem die untere Wirkposition erreicht ist und das Teilstück in dieser Position aufgrund der Schwerkraft unten liegt, berührt das Teigstück bereits beim Einschwenken in die Wirkposition die kreisende Wirkplatte. In dieser Phase kann Teig abgeschert werden. Während und nach dem Wirken, also in der Phase, in der die Trommel weiterdreht, liegt das Teigstück zunächst weiter auf der kreisenden Wirkplatte, die deshalb die rund gewirkten Teigstücke unkontrolliert auf das Band übergibt. Auch nach dem Wirken besteht wieder die Gefahr, dass Teig abgeschert wird.

Bei Vorrichtungen, wie sie beispielsweise aus DE 29 43 088 C2, DE 28 53 270 C2 bekannt sind, erfolgt das Rundwirken durch eine Wirkvorrichtung mittels einer Wirkplatte im Bereich des oberen Scheitelpunktes der Trommel. Bei einer aus EP 0 449 840 B1 bzw. WO 90 06683 A bekannten Vorrichtung erfolgt das Rundwirken durch eine Wirkvorrichtung mit einem Wirkband im oberen Scheitelpunkt der Trommel. Bei einer Vorrichtung nach DE 29 49 562 C2 sind die Teilkammern in einem Schlitten ausgebildet, welcher vertikal verfahren wird. Das Rundwirken erfolgt entweder mit einer davor vertikal angeordneten Wirkplatte oder wie in DE 31 23 200 A1 mit einem davor vertikal angeordneten Wirkband.

Nachteilig bei den vorstehend beschriebenen Vorrichtungen ist, dass die Teigstücke beim Wirken in den Teilkammern liegen und durch den in seiner Position zur Wirkplatte hin verstellbaren Teilkammerboden gegen die Wirkplatte gedrückt werden müssen, damit die Friktion von Teig und Wirkplatte aufrecht erhalten wird; dies ist unbedingt notwendig, damit sich eine annähernd runde Teigkugel bilden kann.

Ferner werden bei den bekannten Vorrichtungen durch eine Wirkplatte bzw. ein Wirkband die rund zu wirkenden Teigstücke in den Teilkammern relativ unkontrolliert hin- und hergestoßen. Ein Wirkergebnis wie das als ideal anzusehende Ergebnis, das mit einer Messerstern- Teigteil- und Wirkmaschine realisiert ist, wird nicht erreicht. Mehr oder weniger unkontrolliert ist auch die Schlußlage bzw. Positionierung der Teigstücke in den Teilkammern und die anschließende Übergabe der rund gewirkten Teigstücke auf nachgeordnete Transportbänder, was sich besonders bei kontinuierlicher Weiterverarbeitung ungünstig auswirkt.

Allen vorgenannten Vorrichtungen bzw. Volumenteilern mit Teilkammern ist ferner gemeinsam, daß die Teilkammern im Trommelmantel bzw. auf der Schlittenoberfläche, bedingt durch die bislang übliche, im allgemeinen sechseckige bzw. runde Grundfläche der Teilkammern, mit einem relativ großen Abstand voneinander angeordnet sind, so daß bezogen auf die Öffnung der Hauptkammer in Relation zu den Teilkammern in einer Trommel bzw. einem Schlitten die Zwischenräume zwischen den Teilkammern eine große Fläche bilden, an welche der Teig durch den Hauptkolben beim Befüllen der Teilkammern gepreßt und dadurch gequetscht wird. Dabei wird die Struktur des Teiges in einer für den späteren Backvorgang sehr ungünstigen Weise verändert, d.h. die Porenstruktur wird mehr oder weniger zerstört, was sich nachteilig auf die Qualität der Backwaren auswirkt.

Um diese negativen Auswirkungen in gewissem Umfang zu mildern, werden in der Regel mehr und teuere Spezialbackmittel eingesetzt. Auch können mit den bekannten Einrichtungen aufgrund der ausgesprochen ungünstigen Beanspruchung des Teiges beim Teilen keine eckigen Teigstücke hergestellt werden, welche einem qualitativen Vergleich zu eckigen Teigstücken standhalten, die mit einer Messerstern- Teigteil- und Wirkmaschine hergestellt worden sind. Ebenso ist es mit den bekannten Vorrichtungen nicht möglich, bei Bedarf beispielsweise bei der Herstellung von sogenannten "Passauer Rosenbrötchen", Fett so optimal wie mit einer Messerstern-Teigteil- und Wirkmaschine in den Wirkschluß einzuwirken.

Aufgabe der Erfindung ist es daher, gleich große runde Teilstücke so herzustellen, daß die annähernd rund gewirkten Teilstücke definiert positioniert an nachgeordnete Fördermittel übergeben werden können. Darüber hinaus soll gemäß der Erfindung erreicht werden, daß der Teig beim Befüllen von Teigkammern hinsichtlich seiner Struktur äußerst schonend behandelt wird.

Gemäß der Erfindung ist diese Aufgabe mit den Verfahrens schritten im Anspruch 1 und mit einer Einrichtung mit den Merkmalen im kennzeichnenden Teil des Anspruchs 3 gelöst. Vorteilhafte Weiterbildungen sind Gegenstand der auf die Ansprüche 1 bzw. 3 unmittelbar oder mittelbar rückbezogenen Ansprüche.

Gemäß der Erfindung sind die rund gewirkten, annähernd kugelförmigen Teigteile mittig zentriert in der jeweiligen Teilkammer positioniert und liegen sowie haften somit während des gesamten Wirkvorgangs auf dem Wirkband.

Ein beim Wirken der Teigstücke über diesen liegender verstellbarer Teilkammerboden gibt den zur Bildung einer idealen Teigkugel erforderlichen Wirkraum synchron zur fortschreitenden Wirkbewegung frei, ohne daß ein nachteiliger Druck auf die Wirklinge ausgeübt wird. Auf diese Weise werden annähernd kugelförmige Teigstück mit einer glatten Oberfläche und einer optimalen inneren Struktur hergestellt, was bisher nur mit einer Messerstern-Teigteil- und Wirkmaschine erreicht worden ist.

Da gemäß der Erfindung ein endloses Wirkband einer Wirkvorrichtung am Ende jedes Wirkvorgangs wieder in die Nullstellung zurückkehrt, liegen die annähernd kugelförmigen Teilstücke in den Teilkammern stets zentrisch und haben exakt positioniert Wirkschluß nach unten mit dem Wirkband. Dies wiederum ist im Hinblick auf eine auf den Wirkvorgang folgende lineare Bewegung zur Übergabe der annähernd kugelförmigen Teigstücke an weitere Bearbeitungsstationen besonders vorteilhaft.

Gemäß einer bevorzugten Ausführungsform der Erfindung kann das endlose Wirkband als ein Wirk- oder Gliederband mit strukturierter Oberfläche ausgeführt sein. Ferner können Wirkbänder eingesetzt werden, die jeweils unterschiedlich strukturiert sind oder auch glatte Oberflächen aufweisen.

Gemäß einer vorteilhaften Weiterbildung der Erfindung haben die in einer Reihe nebeneinander angeordneten, in ihrem Fassungsvermögen bzw. Volumen stufenlos verstellbaren Teilkammern der Trommel einen rechteckigen, vorzugsweise quadratischen Querschnitt und einen Abstand von weniger als 6mm. Gemäß einer weiteren vorteilhaften Ausführungsform der Erfindung können die Wände zwischen den einzelnen Teilkammern und die diesen gegenüberliegenden Wände der beiden äußeren Teilkammern konkav oder konvex gewölbt sein.

Da die Teilkammern von einer Hauptkammer aus mittels eines hydraulisch, pneumatisch oder mechanisch angetriebenen, in seinem Preßdruck stufenlos regelbaren Hauptkolben mit Teig gefüllt werden, wird insbesondere aufgrund der vorteilhaften Ausbildung der Zwischenkammerwände, d.h. der Wände zwischen den Teilkammern, dem durch den Hauptkolben aus der Hauptkammer ausgestoßenen Teig so gut wie kein Widerstand, allenfalls im Vergleich zu den bekannten bisherigen Ausführungen nur ein äußerst geringer Widerstand entgegengesetzt. Somit bleibt gemäß der Erfindung insbesondere im Bereich der Zwischenwände die Struktur des Teiges weitgehend optimal erhalten, was sich äußerst positiv auf die Qualität der Backwaren auswirkt. Obendrein sind keine teuren Spezialbackmittel erforderlich.

Ferner kann gemäß der Erfindung eine Vorrichtung zum Aufbringen von Fett auf in den Kammern befindliche Teigstücke vorgesehen werden; diese Vorrichtung weist nebeneinander angeordnete, der Anzahl der in Reihe nebeneinander angeordneten Teilkammern entsprechende Anzahl ausfahrbare Stempel auf. Aus jedem Stempel kann Fett austreten, so daß damit flächig auf und/oder in die in den Teilkammern befindlichen Teigstücke Fett gedrückt wird. Die so gefetteten Teigstücke werden anschließend so rund gewirkt, daß sich ein Wirkschluß bildet, welcher beim Backen in idealer Weise aufplatzt.

Um eckige Teigstücke herzustellen, kann die Wirkvorrichtung ausgeschaltet werden, so daß mit der erfindungsgemäßen Einrichtung auch eckige Teilstücke hergestellt werden können, die einen qualitativen Vergleich zu mittels Messerstern-Teigteil- und Wirkmaschinen hergestellten Teigstücken standhalten. Beim Wirken mit und ohne Fett oder beim Teilen und Herstellen von eckigen Teigstücken wird somit die bekannte vorteilhafte Arbeitsweise einer Messerstern-Teigteil- und Wirkmaschine bestmöglich nachempfunden und kann in einen kontinuierlichen Arbeitsablauf umgesetzt werden.

Es können somit alle Teige mit den gleichen Verarbeitungsvarianten verarbeitet werden, wie dies bislang nur mit einer Messerstern-Teigteil- und Wirkmaschine möglich war, wobei die hergestellten Produkte sich durch eine entsprechende hervorragende handwerkliche Qualität auszeichnen.

Nachfolgend werden bevorzugte Ausführungsformen der Erfindung anhand der Zeichnungen im einzelnen erläutert. Es zeigen:
- Fig. 1: in schematischer Darstellung den prinzipiellen Aufbau einer bevorzugten Ausführungsform einer erfindungsgemäßen Vorrichtung;
- Fig.2: ebenfalls in schematischer Darstellung eine weitere vorteilhafte Ausführungsform der erfindungsgemäßen Vorrichtung;
- Fig.3a bis 3c: in schematischer Draufsicht vorteilhafte Ausgestaltung von nebeneinander in einer Reihe angeordneten Teilkammern, und
- Fig.4a und 4b: in schematischer Draufsicht bisher übliche Formen von nebeneinander in Reihe angeordneten Teilkammern.

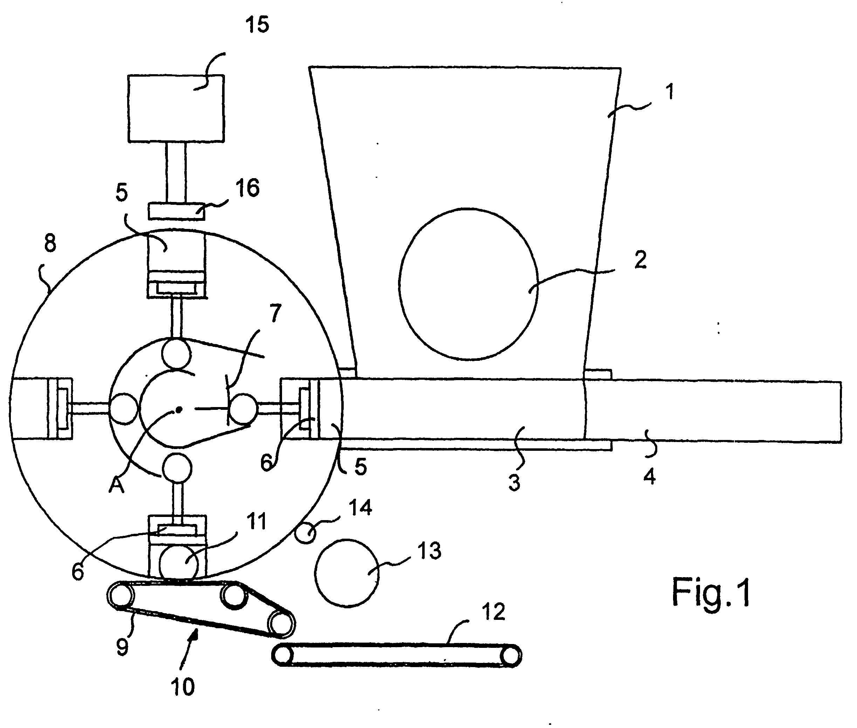

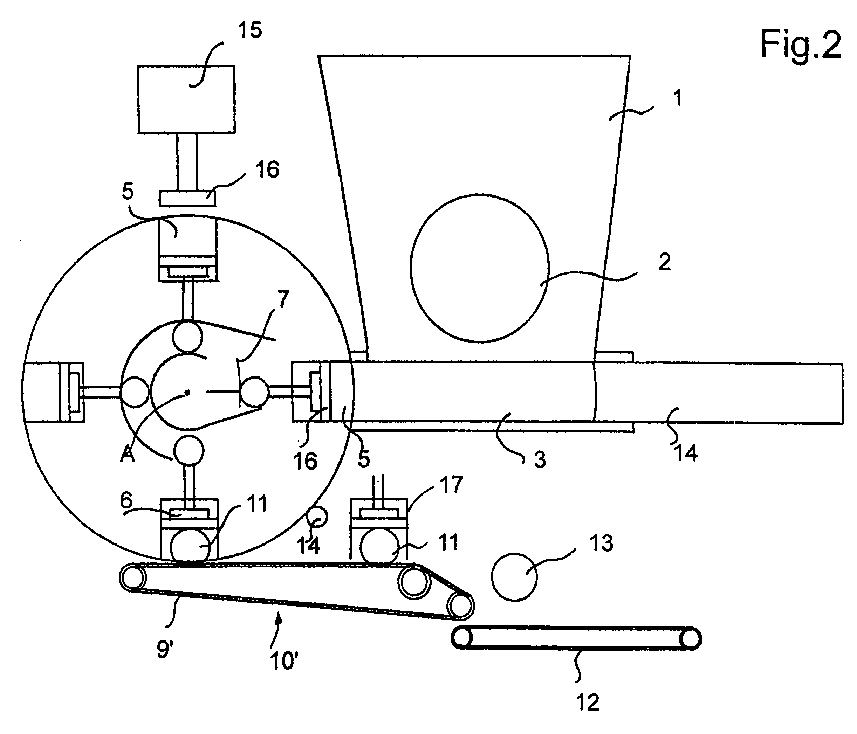

Sowohl in der Ausführungsform nach Fig.1 als auch nach Fig.2 wird über einen Trichter 1 zu verarbeitender, in Fig.1 und 2 nicht näher dargestellter Teig zugeführt, wobei zur bequemen Kontrolle des Füllstandes im Trichter 1 ein Fenster 2 vorgesehen ist. Am in Fig.1 und 2 unteren Ende des sich nach unten im allgemeinen konisch verjüngenden Trichters 1 befindet sich eine Hauptkammer 3, in welcher ein in Richtung zu einer Trommel 8 linear beweglich angeordneter, schematisch angedeuteter Hauptkolben 4 mit einem nicht näher dargestellten Antrieb angeordnet ist. Hierbei ist die Antriebskraft des Hauptkolbens 4 in bekannter Weise stufenlos regelbar.

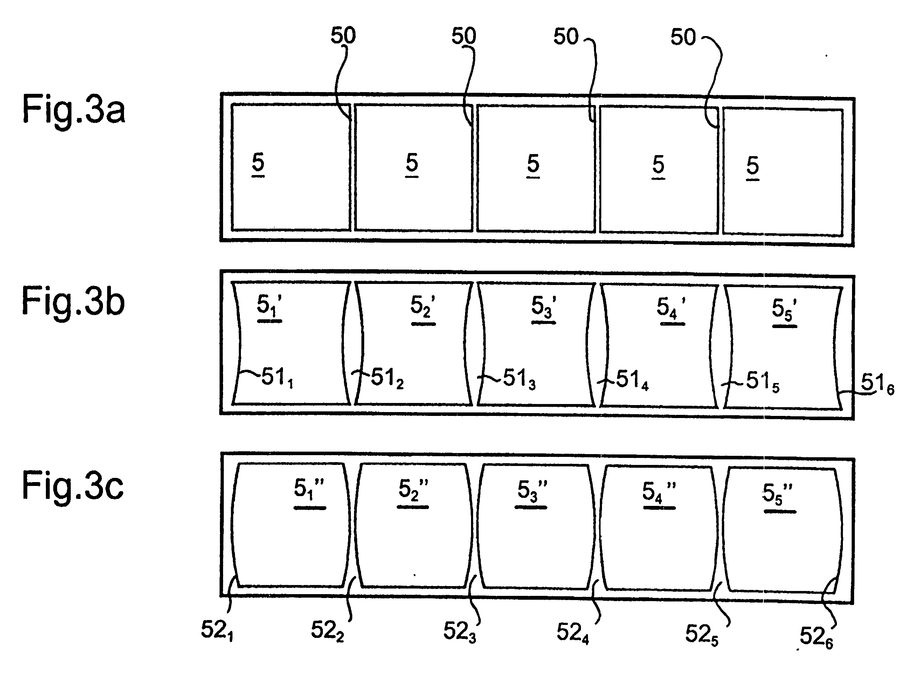

Im Mantel der Trommel 8 sind bei der in Fig.1 und 2 dargestellten Ausführungsform eine Anzahl, beispielsweise um 90° gegeneinander versetzte, nebeneinander in einer Reihe angeordnete Teilkammern 5 untergebracht, die parallel zu einer in Fig.1 und 2 durch einen Punkt angedeuteten Achse A der Trommel 8 ausgerichtet sind. Auf die spezielle Ausgestaltung der Teilkammern 5 wird in Verbindung mit der Beschreibung von Fig.3a bis 3c näher eingegangen. Das Volumen der einzelnen Teilkammern 5 ist mittels den Kammern zugeordneten einstellbaren Teilkammerkolben 6 stufenlos regelbar. Zur Einstellung des Volumens der einzelnen Teilkammern 5 ist diesen ein Endanschlag 7 zugeordnet.

Zum Füllen der in einer Reihe nebeneinander angeordneten Anzahl Teilkammern 5 wird mittels des Hauptkolbens 4, der sich in Fig.1 und 2 in seiner Ausgangsstellung befindet, der in der Hauptkammer 3 befindliche Teig in die Teilkammern 5 gedrückt, deren Fassungsvermögen mittels der Teilkammerkolben 6 stufenlos regelbar ist. Die Teilkammerkolben 6 werden durch die mittels des Hauptkolbens 4 in die Teilkammern gedrückte Teigmenge bis zum entsprechend eingestellten Endanschlag 7 gedrückt. Bei Erreichen des vorgewählten Preßdruckes führt die Trommel 8 einen Arbeitsschritt aus, d.h. sie wird in dem in Fig.1 und 2 dargestellten Funktionsbeispiel um 90° weitergedreht, wodurch die nächste Reihe von nebeneinander angeordneten leeren Teilkammern 5 vor der Hauptkammer 3 positioniert wird.

Nach zwei weiteren Arbeitsschritten, d.h. nach einer Drehung um insgesamt 270°, befindet sich die zuerst mit Teig gefüllte Reihe von nebeneinander angeordneten Teilkammern 5 im unteren Scheitelpunkt der Trommel und ist nach unten ausgerichtet. Der in jeder Teilkammer 5 befindliche Teig wird dabei mittels der verstellbaren Teilkammerkolben 6 nach unten gegen ein dort angeordnetes Wirkband 9 gedrückt. Auf diese Weise erhält die Teigmenge in jeder der Teilkammern 5 einen guten Reibschluß zu dem vorzugsweise mit einer strukturierten Oberfläche versehenen Wirkband 9.

Gleichzeitig mit dem Erreichen der Position, in welcher die Teigmenge in den Teilkammern einer Kammerreihe nach unten gegen das Wirkband gedrückt wird, wird eine das endlose Wirkband 9 tragende Wirkvorrichtung 10 in eine exzentrisch kreisende Wirkbewegung versetzt. Hierbei wird in der Nullstellung mit der Wirkbewegung begonnen und nach Erreichen des maximal möglichen Wirkausschlags des Wirkbandes 9 wird wieder in die Nullstellung zurückgekehrt. Während dieser exzentrisch kreisenden Wirkbewegung werden die Teilkammerkolben 6 synchron zur fortschreitenden Wirkbewegung in die Teilkammern 5 zurückgefahren und geben dadurch den Wirkraum frei, der notwendig ist, um die in jeder Teilkammer befindliche Teigmenge zu einem annähernd kugelförmigen Teigstück rund zu wirken, so daß ein optimaler, annähernd kugelförmiger Wirkling gebildet werden kann.

Nach Beendigung des wenige Sekunden dauernden Wirkvorgangs wird die Trommel 8 mit einer Umfangsgeschwindigkeit weitergedreht, die der gleichzeitig einsetzenden, linearen Vorwärtsbewegung des Wirkbandes 9 entspricht. Mit fortschreitender Drehung der Trommel 8 entgegen dem Uhrzeigersinn werden die Teilkammerkolben 6 in Richtung Trommelaußenfläche so weit ausgefahren, daß die Kolben die Außenfläche erreicht haben, bevor die Reihe Teilkammern 5 die Befüllposition an der Hauptkammer 3 erreicht hat.

Die auf dem Wirkband 9 liegenden und durch dieses weiterbeförderten, annähernd kugelförmigen Wirklinge 11 werden auf ein Übergabeband 12 oder alternativ auf nicht näher dargestellte Spreizbänder befördert. Um eine sichere Übergabe der Wirklinge vom Wirkband 9 auf das Übergabeband 12 bzw. die Spreizbänder zu gewährleisten, ist vorzugsweise in dem Übergabebereich eine entsprechend ein- und verstellbare Übergabewalze 13 angeordnet. Um ein sicheres Ablösen der rund geformten Teigstücke 11 vom Boden der Teilkammern 5 zu gewährleisten, kann zusätzlich eine Abstreifwalze 14 am Mantel der Trommel 8 angeordnet sein.

Vorzugsweise genau diametral gegenüber der Position, in welcher aus den in den Teilkammern 5 befindlichen Teigmengen diese zu annähernd kugelförmigen Wirklingen 11 geformt werden, ist eine Vorrichtung 15 vorgesehen, aus welcher eine der Anzahl nebeneinander angeordneter Teilkammern entsprechende Anzahl kolbenartiger Stempel 16 ausgefahren und gegen die in den einzelnen Teilkammern 5 befindliche Teigmenge gedrückt werden kann. Wenn dies der Fall ist, wird aus den einzelnen Stempeln 16 flächig auf und/oder in die in den einzelnen Kammern befindlichen Teigstücke Fett gedrückt.

Die in Fig.2 schematisch dargestellte Ausführungsform der erfindungsgemäßen Einrichtung weist im Unterschied zu der in Fig.1 wiedergegebenen Ausführungsform eine längere Wirkvorrichtung 10' und damit auch ein entsprechend längeres endloses Wirkband 9' auf. Zusätzlich ist noch eine weitere Wirkstation 17 vorgesehen, welche im Takt mit der linearen Vorwärtsbewegung des längeren Wirkbandes 9' angehoben und abgesenkt wird, so daß die jeweils auf dem Wirkband 9' liegende Reihe von Teigstücken 11 in die Wirkstation 17 befördert wird.

In der zweiten Wirkstation 17 wird der Wirkvorgang in der Weise beendet, daß aus den in der ersten, in Fig.2 weiter links angeordneten Wirkstation nur teilweise rund gewirkten Teigmengen fertig rund gewirkte und damit annähernd kugelförmiges Teigstücke hergestellt werden. Durch diese Maßnahme ist die Wirkzeit beispielsweise auf zwei Wirkstationen verteilt und wird dadurch insgesamt etwa halbiert, wodurch die Stundenleistung der Einrichtung entsprechend gesteigert wird.

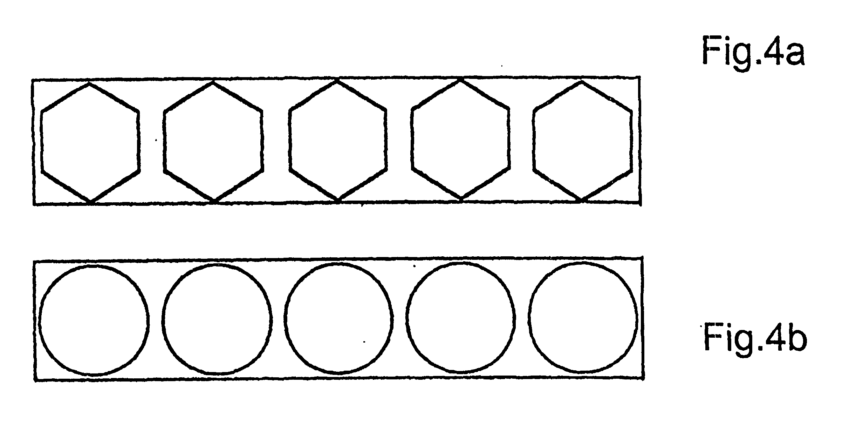

In Fig.4a und 4b sind in schematischer Draufsicht beispielsweise jeweils fünf nebeneinander in Reihe angeordnete Teilkammern dargestellt, deren Grundflächen die Form eines Kreises oder eines gleichseitigen Sechsecks haben. Bezogen auf die Öffnung einer Hauptkammer, beispielsweise der Hauptkammer 9, stellen im Vergleich zu der Fläche der beispielsweise fünf in einer Reihe angeordneten Teilkammern die Zwischenbereiche zwischen, oberhalb und unterhalb der runden bzw. sechseckigen Teilkammern eine verhältnismäßig große Fläche dar, gegen welche der Teig durch den Hauptkolben beim Befüllen dieser Teilkammern gepreßt und dadurch gequetscht wird.

Im Unterschied hierzu sind bei quadratischen Teilkammern 5, d.h. den Teilkammern 5 mit quadratischer Grundfläche, wie in Fig.3a dargestellt, die Bereiche zwischen den beispielsweise fünf Teilkammern 5₁ bis 5₅ vorzugsweise als schmale Zwischenkammerwände 50₂ bis 50₅ ausgeführt, deren Wandstärke beispielsweise in der Größenordnung von 2 bis 2,5mm liegen kann. Damit ergibt sich, wie der Draufsicht der Fig.3a zu entnehmen ist, ein sehr günstiges Verhältnis der Oberflächen der Zwischenkammerwände 50, d.h. der Flächen zwischen den quadratischen Teilkammern 5 zu der Fläche der Öffnung der Hauptkammer 3.

Bei einer Seitenlänge von beispielsweise 60mm der quadratischen Grundflächen der Teilkammern 5 beträgt dieses Verhältnis 1:29,8. Bei kreisrunden Teilkammern mit einem Durchmesser von 60mm ergibt sich ein Verhältnis der Oberfläche der Zwischenbereiche zwischen den runden Teilkammern zur Fläche der Hauptkammeröffnung von 1 : 4,2, während bei Teilkammern mit einer sechseckigen Grundfläche das entsprechende Verhältnis bei 1 : 3,6 liegt. Hieraus ist zu ersehen, wie niedrig der Widerstand ist, der beim Befüllen von quadratischen Teilkammern auf den Teig wirkt, oder mit anderen Worten, beim Befüllen von quadratischen Teilkammern bleibt die Teigstruktur erhalten.

Die Teigstruktur bleibt auch dann weitestgehend erhalten, wenn, wie in Fig.3b dargestellt, die zwischen beispielsweise fünf Teilkammern 5₁' bis 5₅' ausgebildeten Wände 51₂ bis 51₅ und die diesen gegenüberliegenden Wände 51₁ und 51₆ der beiden äußeren Teilkammern 5₁' und 5₆' konkav gewölbt sind. Ähnlich gute Ergebnisse wie bei den quadratischen Teilkammern 5 werden erhalten, wenn Zwischenkammerwände 52₂ bis 52₅ und die gegenüberliegenden Wände 52₁ und 52₆ der beiden äußeren Teilkammern 5₁" und 5₆" konvex gewölbt sind. In beiden Fällen bleibt die Struktur der mittels des Hauptkolbens 9 in die Teilkammern gepreßten Teigmengen im wesentlichen erhalten bzw. wird allenfalls nur sehr geringfügig beeinträchtigt.

## Patentansprüche

1. Verfahren zum Herstellen von gleich großen runden Teigstücken (11), bei welchem jeweils in Reihen nebeneinander angeordnete Teilkammern (5) einer schrittweise drehbaren Trommel (8) mit einer vorgegebenen Teigmenge befüllt werden, und die in die Teilkammern einer Reihe eingebrachten Teigmengen von außen durch eine nur im Bereich des unteren Scheitelpunktes der Trommel durchgeführte Wirkbewegung rund gewirkt werden, wobei bei einer als exzentrische Kreisbewegung ausgeführten Wirkbewegung ausgehend von einer Nullstellung über den maximal möglichen Wirkausschlag wieder in die Nullstellung zurückgekehrt wird, **dadurch gekennzeichnet, dass** die Wirkbewegung am Ende jedes Wirkvorgangs wieder in die Nullstellung zurückkehrt, wodurch jeweils die in die Teilkammern in einer Reihe eingebrachten Teigmengen zu annähernd kugelförmigen Teigstücken rund gewirkt und dabei gleichzeitig mittig zentriert in den jeweiligen Teilkammern positioniert werden.

2. Verfahren nach Anspruch 1, **dadurch gekennzeichnet, daß** nach Durchführen eines Wirkvorgangs, bei welchem die in die Teilkammern eingebrachten Teigmengen rund gewirkt worden sind, die rund gewirkten Teigstücke synchron zur Umfangsgeschwindigkeit der Trommel in eine lineare Vorwärtsbewegung überführt werden.

3. Einrichtung zum Herstellen von gleich großen runden Teigstücken mit einer schrittweise drehbaren Trommel (8), in deren Mantel eine Anzahl von parallel zur Trommelachse in Reihen nebeneinander angeordnete, im Volumen stufenlos regelbare Teilkammern (5) untergebracht sind, die von einer Hauptkammer (3) aus mittels eines hydraulisch, pneumatisch oder mechanisch angetriebenen Hauptkolben mit stufenlos regelbarem Preßdruck mit einer bestimmten Menge Teig befüllbar sind, und mit einer im Bereich des unteren Scheitelpunkts der Trommel (8) außerhalb von dieser angeordneten Wirkvorrichtung (10), **dadurch gekennzeichnet, daß** die Wirkvorrichtung (10) ein eine exzentrisch kreisende Wirkbewegung ausführendes endloses Wirkband (9) aufweist, wobei das Wirkband (9) ausgehend von einer Nullstellung über einen maximal möglichen Wirkausschlag wieder in die Nullstellung zurückkehrt, und wobei das Wirkband am Ende jedes Wirkvorgangs wieder in die Nullstellung zurückkeht, wodurch die in die Anzahl von parallel zur Trommelachse in Reihen nebeneinander angeordneten Teilkammern (5) einer Reihe eingebrachten Teigmengen zu annähernd kugelförmigen Teigstücken rund wirkt und mittig zentriert in der jeweiligen Teilkammer positioniert werden.

4. Einrichtung nach Anspruch 3, **dadurch gekennzeichnet, daß** das endlose Wirkband (9) nach Beendigung des Wirkvorgangs synchron zur Umfangsgeschwindigkeit der schrittweise weiter gedrehten Trommel (8) eine entsprechende lineare Vorwärtsbewegung ausführt.

5. Einrichtung nach einem der Ansprüche 3 oder 4, **dadurch gekennzeichnet, daß** das Wirkband (9) ausgelegt ist als ein end Gliederband mit strukturierter Oberfläche.

6. Einrichtung nach einem der Ansprüche 3 bis 5, **dadurch gekennzeichnet, daß** das Wirkband eine strukturierte oder auch glatte Oberfläche aufweist.

7. Einrichtung nach einem der Ansprüche 3 bis 6, **dadurch gekennzeichnet, daß** bei einer längeren Wirkvorrichtung (10') in angemessenem Abstand vom unteren Scheitelpunkt der Trommel (8) eine oder mehrere weitere Wirkstationen (17) angeordnet sind.

8. Einrichtung nach einem der Ansprüche 3 bis 7, **dadurch gekennzeichnet, daß** die in Reihe nebeneinander angeordneten, im Volumen stufenlos verstellbaren Teilkammern (5) der Trommel (8) einen rechteckigen Querschnitt und einen Abstand von weniger als 6mm haben.

9. Einrichtung nach Anspruch 8, **dadurch gekennzeichnet, daß** die Teilkammern (5) einen quadratischen Querschnitt haben.

10. Einrichtung nach einem der Ansprüche 8 oder 9, **dadurch gekennzeichnet, daß** die zwischen den einzelnen Teilkammern (5₁' bis 5₅') ausgebildeten Wände (51₂ bis 51₅) und die gegenüberliegenden Wände (51₁, 51₆) der beiden äußeren Teilkammern (5₁', 5₅') konkav gewölbt sind

11. Einrichtung nach einem der Ansprüche 8 oder 9, **dadurch gekennzeichnet, daß** die zwischen den einzelnen Teilkammern (5₁" bis 5₅") ausgebildeten Wände (52₂ bis 52₅) und die gegenüberliegenden Wände (52₁, 52₆) der beiden äußeren Teilkammern (5₁", 5₅") konvex gewölbt sind

12. Einrichtung nach Anspruch 3, **dadurch gekennzeichnet, daß** eine Vorrichtung (15) zum Aufbringen von Fett auf in den in einer Reihe nebeneinander angeordneten Teilkammern (5; 5'; 5") befindliche Teigstücke in ihrer Abmessung den Teilkammern (5; 5'; 5") angepaßte ausfahrbare Stempel (16) aufweist, mittels welchen aus den Stempeln (16) austretendes Fett auf und/oder in die in den Teilkammern (5; 5'; 5") befindlichen Teigmengen gedrückt wird.

## Claims

1. A method of producing uniform round pieces of dough (11) comprising the steps of filling each of a train of divider chambers (5) of a rotationally indexed drum (8) with a metered nugget of dough and rounding the nuggets of dough metered into the divider chambers from without by a shaping motion implemented only in the region of the nadir of the drum in thereby returning a shaping motion performed as an eccentric circular motion starting from a zero point via the maximum possible shaping extent back to the zero point and returning the shaping motion at the end of each shaping back to the zero point, **characterized in that** the nuggets of dough metered into the train of divider chambers are each rounded into approximately spherical pieces of dough whilst simultaneously being positioned centrally in each divider chamber.

2. The method as set forth in claim 1, **characterized in that** after implementing shaping in which the nuggets of dough metered into the divider chambers are rounded, the rounded pieces of dough are transferred in synchronism to the peripheral velocity of the drum into a linear forward motion.

3. An apparatus for producing uniform round pieces of dough comprising a drum (8) for indexing rotation, in the shell of which a train of divider chambers (5) of infinitely variable volume are accommodated parallel to the axis of the drum for filling from a main chamber (3) with a metered nugget of dough by means of a hydraulic, pneumatic or mechanical powered main plunger, the pressure of which is infinitely variable, and a shaper (10) arranged in the region of the nadir of the drum (8) outside thereof, **characterized in that** the shaper (10) comprises an endless shaping belt (9) implementing an eccentric circular shaping motion, the shaping belt (9) starting from a zero point via the maximum possible shaping extent back to the zero point and returning the shaping motion at the end of each shaping back to the zero point, resulting in the metered dough nuggets in each train of divider chambers (5) parallel to the drum axis being rounded into approximately spherical pieces of dough positioned centrally in each divider chamber.

4. The apparatus as set forth in claim 3, **characterized in that** the endless shaping belt (9) on completion of shaping implements a corresponding linear forwards motion in synchronism with the peripheral velocity of the rotationally indexed drum.

5. The apparatus as set forth in claim 3 or 4, **characterized in that** the shaping belt (9) is designed as a segmented belt with a structured surface.

6. The apparatus as set forth in any of the claims 3 to 5, **characterized in that** the shaping belt (9) comprises a structured or also smooth surface.

7. The apparatus as set forth in any of the claims 3 to 6, **characterized in that** for a longer shaper (10') one or more shaping stations (17) are arranged suitably spaced from the nadir of the drum (8).

8. The apparatus as set forth in any of the claims 3 to 7, **characterized in that** the divider chambers (5) of each train for infinitely variable volume of the drum (8) have a rectangular cross-section and a spacing of less than 6 mm.

9. The apparatus as set forth in claim 8, **characterized in that** the divider chambers (5) have a square cross-section.

10. The apparatus as set forth in claim 8 or 9, **characterized in that** the walls (51₂ to 51₅) configured between the individual divider chambers (5₁' to 5₅') and the facing walls (51₁ and 51₆) of the two outer divider chambers (5₁' and 5₅') are curved concave.

11. The apparatus as set forth in claim 8 or 9, **characterized in that** the intermediate walls (52₂ to 52₅) configured between the individual divider chambers (5₁" to 5₅" ) and the facing walls (52₁ and 52₆) of the two outer divider chambers (5₁" and 5₅") are curved convex.

12. The apparatus as set forth in claim 3, **characterized in that** a device (15) for applying fat to pieces of dough located in a train of divider chambers (5; 5'; 5") comprises extensible plungers (16) adapted in size to the divider chambers (5; 5'; 5"), by means of which fat emerging from the punches (16) is urged on and/or in the nuggets of dough located in the divider chambers (5; 5'; 5").

## Revendications

1. Procédé de fabrication de morceaux de pâte arrondis de mêmes dimensions (11), dans lequel des chambres partielles (5) d'un tambour pouvant tourner pas à pas (8), disposées en lignes les unes à côté des autres, sont respectivement remplies avec une quantité de pâte prédéterminée et les quantités de pâte introduites dans les chambres partielles d'une ligne sont arrondies de l'extérieur par un mouvement de travail exercé uniquement dans la zone du point bas de la voûte du tambour, dans lequel un mouvement de travail effectué sous la forme d'un mouvement circulaire excentrique à partir d'une position zéro passe par l'excursion de travail maximale possible pour revenir à la position zéro, **caractérisé en ce que** le mouvement de travail revient à la position zéro à la fin de chaque cycle de travail, grâce à quoi les quantités de pâte introduites respectivement dans les chambres partielles d'une ligne sont arrondies en morceaux de pâte de forme approximativement sphérique et sont ainsi positionnées en même temps au centre des différentes chambres partielles.

2. Procédé selon la revendication 1, **caractérisé en ce que**, après l'exécution d'un cycle de travail dans lequel les quantités de pâte introduites dans les chambres partielles ont été arrondies, les morceaux de pâte arrondis sont entraînés dans un mouvement d'avance linéaire synchronisé avec la vitesse circonférentielle du tambour.

3. Dispositif pour fabriquer des morceaux de pâte arrondis de mêmes dimensions, comprenant un tambour pouvant tourner pas à pas (8) dans l'enveloppe duquel est disposée une pluralité de chambres partielles (5), agencées en lignes les unes à côté des autres parallèlement à l'axe du tambour et réglables en volume de manière continue, qui peuvent être remplies avec une quantité de pâte définie à partir d'une chambre principale (3), au moyen d'un piston principal commandé hydrauliquement, pneumatiquement ou mécaniquement avec une pression de compression réglable de manière continue, ainsi qu'un dispositif de travail (10) disposé dans la zone du point bas de la voûte du tambour (8) et à l'extérieur de celui-ci, **caractérisé en ce que** le dispositif de travail (10) présente une bande de travail sans fin (9) qui effectue un mouvement de travail circulaire excentrique, la bande de travail (9) partant d'une position zéro pour passer par une excursion maximale possible et revenir à la position zéro et la bande de travail revenant à la position zéro à la fin de chaque cycle de travail, grâce à quoi les quantités de pâte introduites dans les chambres partielles d'une ligne de la pluralité de chambres partielles (5) disposées en lignes les unes à côté des autres parallèlement à l'axe du tambour sont arrondies en morceaux de pâte de forme approximativement sphérique et sont positionnées au centre de la chambre partielle concernée.

4. Dispositif selon la revendication 3, **caractérisé en ce que**, à la fin du cycle de travail, la bande de travail sans fin (9) exécute un mouvement d'avance linéaire correspondant synchronisé avec la vitesse circonférentielle du tambour (8) qui continue à tourner pas à pas.

5. Dispositif selon l'une des revendications 3 ou 4, **caractérisé en ce que** la bande de travail (9) est réalisée sous la forme d'une bande articulée avec une surface structurée.

6. Dispositif selon l'une des revendications 3 à 5, **caractérisé en ce que** la bande de travail présente une surface structurée mais aussi une surface lisse.

7. Dispositif selon l'une des revendications 3 à 6, **caractérisé en ce que**, dans le cas d'un dispositif de travail plus long (10'), un ou plusieurs autres postes de travail (17) sont disposés à une distance déterminée du point bas de la voûte du tambour (8).

8. Dispositif selon l'une des revendications 3 à 7, **caractérisé en ce que** les chambres partielles (5) du tambour (8), disposées en ligne les unes à côté des autres et réglables en volume de manière continue, ont une section rectangulaire et sont distantes de moins de 6 mm.

9. Dispositif selon la revendication 8, **caractérisée en ce que** les chambres partielles (5) ont une section carrée.

10. Dispositif selon l'une des revendications 8 ou 9, **caractérisé en ce que** les parois (51₂ à 51₅) formées entre les différentes chambres partielles (5₁' à 5₅') et les parois opposées (51₁, 51₆) des deux chambres partielles extérieures (5₁', 5₅') sont cintrées selon une forme concave.

11. Dispositif selon l'une des revendications 8 ou 9, **caractérisé en ce que** les parois (52₂ à 52₅) formées entre les différentes chambres partielles (5₁" à 5₅") et les parois opposées (52₁, 52₆) des deux chambres partielles extérieures (5₁", 5₅") sont cintrées selon une forme convexe.

12. Dispositif selon la revendication 3, **caractérisé en ce qu'**un dispositif (15) pour déposer de la matière grasse sur des morceaux de pâte présents dans les chambres partielles (5 ; 5' ; 5") disposées en ligne les unes à côté des autres présente des poinçons (16), qui peuvent être sortis et dont les dimensions sont adaptées à celles des chambres partielles (5 ; 5' ; 5"), au moyen desquels de la matière grasse sortant des poinçons (16) est comprimée sur et/ou dans les quantités de pâte présentes dans les chambres partielles (5 ; 5' ; 5").
